(19) **Europäisches Patentamt / European Patent Office / Office européen des brevets**

(11) **EP 3 885 990 B1**

(12) **EUROPEAN PATENT SPECIFICATION**

(45) Date of publication and mention
of the grant of the patent:
**02.07.2025 Bulletin 2025/27**

(21) Application number: **20169091.4**

(22) Date of filing: **09.04.2020**

(51) International Patent Classification (IPC):
*G06V 10/44* (2022.01)       *G06V 10/80* (2022.01)
*G06V 10/82* (2022.01)       *G06F 18/25* (2023.01)

(52) Cooperative Patent Classification (CPC):
**G06V 10/454; G06F 18/254; G06V 10/809;
G06V 10/82;** G06V 2201/031

(54) **LANDMARK DETECTION**

LANDMARKENDETEKTION

DÉTECTION DE REPÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2020 US 202063000134 P**

(43) Date of publication of application:
**29.09.2021 Bulletin 2021/39**

(73) Proprietor: **Siemens Healthineers AG
91301 Forchheim (DE)**

(72) Inventors:
• **Liao, Rui
Princeton Junction, NJ 08550 (US)**

• **Zhang, Yue
Long Island City, NY 11101 (US)**

(74) Representative: **Siemens Healthineers
Patent Attorneys
Postfach 22 16 34
80506 München (DE)**

(56) References cited:
**EP-A1- 3 370 206     EP-A2- 3 246 875**

• **ATHANASIOS VLONTZOS ET AL: "Multiple
Landmark Detection using Multi-Agent
Reinforcement Learning", ARXIV.ORG,
CORNELL UNIVERSITY LIBRARY, 201 OLIN
LIBRARY CORNELL UNIVERSITY ITHACA, NY
14853, 30 June 2019 (2019-06-30), XP081446425**

## Description

Technical Field

The invention relates to a method and an apparatus for detecting landmarks, and more particularly to a method and an apparatus for detecting one or more landmarks of a medical image.

Background

Medical imaging is used in the field of medicine to inform diagnosis of medical conditions. The identification of certain landmarks, such as anatomical landmarks, in a medical image can help a clinician to assess the image. As an example, ultrasound imaging is a commonly used form of medical imaging for cardiac diagnosis. Automated anatomical landmark detection on cardiac ultrasound images can offer guidance for clinicians to assess cardiac status of the patient.

Reinforcement Learning is a type of machine learning in which an agent learns how to interact with a training environment so as to maximize rewards resulting from its actions. Once trained, an agent may be applied to a test environment. The trained agent may take one of a number of actions to transition between states of the test environment. A trained function (also known as a Q function) of the trained agent produces an action value (also known as a Q value) representing the quality of each state-action combination. An action is taken by the trained agent based on the action values, and in this way the agent may interact with the test environment based on its training.

Multiple-Agent Reinforcement Learning is a form of Reinforcement Learning that employs multiple such agents. As a result of the learning, a trained multi-agent module is provided.

The trained multi-agent module can apply a plurality of trained agents to a test environment, so that the agents interact with the test environment based on the training.

The application of Reinforcement Learning techniques, and/or the trained agents resulting therefrom, to landmark detection in medical images presents problems. For example, there exist problems relating to the performance, robustness, and/or reliability of trained agents applied to medical image data, as well as problems relating to the efficiency of the training of the agents to perform the landmark detection.

EP 3 246 875 A2 discloses computer-based automated medical image registration using an intelligent artificial agent. Multiple agents can be trained in a coordinated fashion to register multiple objects. A master agent is trained to coordinate the actions suggested from the individual object-specific agents and output the optimal overall action.

Athanasios Vlontzos et al: "Multiple Landmark Detection using Multi-Agent Reinforcement Learning", ARXIV.ORG, CORNELL UNIVERSITY LIBRARY, 201 OLIN LIBRARY CORNELL UNIVERSITY ITHACA, NY 14853, 30 June 2019, XP081446425, discloses multiple landmark detection using multi-agent reinforcement learning. It is proposed that finding one landmark can help to deduce the location of others. A deep Q-Network is used, where during training the agents collaborate by sharing their accumulated knowledge.

EP 3 370 206 A1 discloses multi-scale detection of anatomical landmarks in medical images. For each anatomical landmark an intelligent artificial agent may be used. Each agent predicts the trajectory to the landmark location using a trained neural network. The trained neural network inputs a region of interest surrounding a current location of the medical image to calculate action-values corresponding to actions that move the current location in different directions.

It is desirable to provide for automated landmark detection in medical images that has good performance and/or is robust and/or reliable, and/or to provide for automated landmark detection in medical images in an efficient way.

Summary

According to a first aspect of the invention, there is provided a computer-implemented method for detecting one or more landmarks of a medical image according to claim 1.

Optionally, the method further comprises outputting, for each agent, information indicating the location, within the image data, of the sub-region associated with the agent, thereby to indicate a location of the detected one or more landmarks. Optionally, the method is for detecting a plurality of landmarks of a medical image, each landmark of the plurality of landmarks being of a different type, and wherein each agent has been trained to detect a respective different landmark type.

Optionally, the medical image is a 3D medical image, and wherein the sub-regions of the agents correspond to sub-volumes of the image data.

Optionally, the medical image is a cardiac ultrasound image, and wherein said landmarks are anatomical landmarks of the heart.

Optionally, the multi-agent module is a multi-agent neural network.

Optionally, the multi-agent module has been trained using multi-agent deep reinforcement learning.

Optionally, each agent of the plurality of agents has been trained, using deep reinforcement learning, separately to each other of the plurality of agents.

Optionally, the deep reinforcement learning that has been used to train each agent is based on a reward function comprising a distance between a sub-region, with which the agent is associated, of training image data and a ground truth location in the training image data of a landmark that the agent is to detect.

A set of the second action values is determined for each agent, each second action value of the set corresponding to a respective movement of the predetermined set of movements of the sub-region that the agent is configured to perform, wherein the action to be performed by each agent is determined, for each agent, based on a combination of the second action value and the first action value for each movement of the predetermined set of movements.

Optionally, the method comprises, at each agent, for each movement of the predetermined set of movements that the agent is configured to perform, performing a weighted sum of the second action value associated with the movement and the first action value calculated for the movement; and wherein, for each agent, determining the action to be performed by the agent comprises determining the movement of the predetermined set of movements that has the largest said weighted sum.

Optionally, the trained consultant module neural network comprises fully connected layers trained to transform a combination of the sets of first action values obtained for each agent into a combination of said second action values for each agent, wherein the combination of the sets of first action values comprises a concatenation of the sets of first action values, and the combination of the second action values is in the form of a vector whose entries indicate the second action values for each agent in a predetermined order.

Optionally, the method comprises concatenating the sets of first action values calculated by the agents, and wherein the trained consultant module neural network determines the one or more second action values for each of the plurality of agents based on the concatenation of the sets of first action values.

The consultant module neural network has been trained using supervised learning.

Input training data for the supervised learning comprises said first action values from each of a plurality of said agents of a trained multi-agent module applied to training image data, wherein output training data for the supervised learning comprises said second action values for each agent; and wherein a supervision signal for the supervised learning comprises, for each agent, a ground truth location of a landmark within the training image data that the agent is trained to detect.

Optionally, each of the agents calculates for the sub-region to which it is applied a set of encoded features representing the sub-region of the image data; wherein the method further comprises obtaining for each of the plurality of agents, the set of encoded features calculated by the agent; and wherein the trained consultant module neural network determines the one or more second action values for each of the plurality of agents based on the sets of encoded features obtained for all of the agents.

Optionally, the method comprises concatenating the sets of encoded features calculated by the agents, and wherein the trained consultant module neural network determines the one or more second action values for each of the plurality of agents based on the concatenation of the sets of encoded features.

Optionally, the trained consultant module neural network comprises convolutional layers trained to transform the sets of encoded features to a first vector of dimension equal to that of a second vector resulting from a or the concatenation of the sets of first action values; wherein the method comprises performing an element wise sum of the first vector and the second vector to produce a third vector; and wherein the trained consultant module neural network determines the one or more second action values for each of the plurality of agents based on the third vector.

Optionally, the trained consultant module neural network comprises fully connected layers trained to transform the third vector into a fourth vector representing the determined second action values for all of the agents, each entry of the forth vector being associated with a given movement of the predetermined set movements of a given agent.

Optionally, the consultant module neural network has been trained using supervised learning; wherein input training data for the supervised learning comprises said first action values and said encoded features from each of a plurality of said agents of a trained multi-agent module applied to training image data, wherein output training data for the supervised learning comprises said second action values for each agent; and wherein a supervision signal for the supervised learning comprises, for each agent, a ground truth location of a landmark within the training image data that the agent is trained to detect.

According to a second aspect of the present invention, there is provided a computer implemented method for training a trained consultant module neural network according to claim 10.

Optionally, each of the agents calculates for the sub-region of the training image data to which it is applied a set of encoded features representing the sub-region of the training image data, and wherein the input training data further comprises the encoded features calculated by each of the agents.

The training is by supervised learning.

A supervision signal for the supervised learning comprises, for each agent, a ground truth location of a landmark within the training image data that the agent is trained to detect.

Optionally, each agent of the plurality of agents has been trained, using deep reinforcement learning, separately to each other of the plurality of agents.

The trained consultant module neural network of the first aspect if provided by the method according to the second aspect.

According to a third aspect of the invention, there is provided a computer program according to claim 11.

According to a fourth aspect of the invention, there is provided a computer readable storage medium according to claim 12.

Brief Description of the Drawings

Figure 1 is a flow diagram illustrating a method according to an example;
Figure 2 is a diagram illustrating schematically a medical image according to an example;
Figure 3 is a diagram illustrating schematically an agent according to an example;
Figure 4 is a diagram illustrating schematically the interaction between a consultant module and two agents according to an example;
Figure 5 is a diagram illustrating schematically the interaction between a consultant module and two agents according to an example;
Figure 6 is a diagram illustrating schematically the interaction between a consultant module and two agents according to an example; and
Figure 7 is a diagram illustrating schematically a computer system according to an example.

Detailed Description

In Reinforcement Learning, an artificial agent learns how to interact with a training environment so as to maximize rewards resulting from its actions. This is implemented using a Markov Decision Process.

In the context of detecting landmarks of an image, Reinforcement Learning may be formulated as an agent navigation problem. In this case, by Reinforcement learning, the agent learns to navigate the image data of the image until it reaches a particular ground truth location of a landmark.

Similarly, in the context of detecting landmarks of an image, Multi-Agent Deep Reinforcement Learning may be applied where each of a plurality of agents learns to navigate the image data of the image until the agent reaches a particular ground truth location of one or more landmarks. For example, each agent may be trained to navigate to a different landmark type.

Considering Multi-Agent Deep Reinforcement Learning involving N-agents, a Markov Decision Process may be defined by the tuple {$S$, $A$, $t$, $r$} where:

- $S$ is the state of each agent {$S_1, S_2, ..., S_N$}. In the context of landmark detection of an image, the state of each agent corresponds to the sub-region of training image data associated with the agent. The sub-region may be centered at the notional location $p_i$ of the agent $i$ within the training image data.

- A is the predetermined set of actions that each agent is configured to perform. In the context of landmark detection of an image, the predetermined set of actions correspond to a predetermined set of movements within the training image data that the agent is configured to perform. For example, in the context of three-dimensional training image data in a space defined by axes x, y, z, each agent $i$ may perform an action $A_i$ from the action space {$x_+, x_-, y_+, y_-, z_+, z$} where the subscript '+' represents a movement of one incremental unit or step along the positive direction of the associated axis, and the subscript '-' represents a movement of one incremental unit or step along the negative direction of the associated axis.

- t is a stochastic transition function S x A x S' → [0;1] describing the probability (between 0 and 1) of arriving in a certain state S' given a certain action A performed on an initial state S.

- $r$ is the rewards collected by the agents by interacting with the environments {$r_1, r_2, .., r_N$}. In the context of landmark detection, the reward $r_i$ of a given agent $i$ is formulated as

$$r_i = \left\| p_i^c - p_i^{gt} \right\|_2^2 - \left\| p_i^n - p_i^{gt} \right\|_2^2$$

. In this equation, $p_i^c$ is the current location of agent i (i.e. the location of the sub-region of the training image data to which the agent corresponds), $p_i^{gt}$ is the ground truth location of the landmark that agent i is pursuing, and $p_i^n$ is the location of the agent $i$ after the action is performed. Accordingly, an agent collects a positive reward if it moves closer to the ground truth location of the landmark that it is pursuing and a negative reward otherwise.

Given this framework, each agent learns to navigate the image data to maximize its own total expected return $R_i$ over total time $T$ according to the function

$$R_i = \sum_{t=0}^{T} \gamma_i^t r_i^t$$

, where $t$ is the time during the agents navigation at which the reward is achieved and $\gamma$ is a discount factor that lowers the reward the further into the future the reward is achieved.

Each agent learning to navigate the image data as described above comprises, for each agent, training a function (also referred to as a Q function) associated with the agent that calculates action values (also known as Q values) representing the (learned) quality of state-action combinations. In some examples, the function may be approximated by a neural network. Approximating the function with a neural network may be beneficial in applications dealing with complex data such as image data as it may be difficult to derive an appropriate function directly. In examples where the function is approximated by a neural network, training the function comprises training the neural network, for each agent. The neural network may be a deep neural network, i.e. one with multiple layers between its input and output layers.

In the context of landmark detection, the function (which may be approximated by a neural network) of each agent is trained to calculate, for given image data included in the sub-region associated with the agent, an action value for each of the movements $\{x_+, x_-, y_+, y_-, z_+, z_-\}$ of the sub-region. The action value for a given movement represents the learned probability that, for the given image data included in the sub-region, the given movement of the sub-region will result in the sub-region moving closer to the target landmark for that agent. Accordingly, the function (neural network) is trained to produce higher action values for actions that, given the image data of the sub-region, are estimated to have a higher probability of the sub-region moving closer to the target landmark, and lower action values for actions that, given the image data of the sub region, are estimated have a lower probability of the sub-region moving away from the target landmark.

As a result of the multi-agent deep reinforcement learning, a trained multi-agent module is provided. The trained multi agent module may take the form of a trained multi-agent neural network. For example, in examples where the function of each agent is approximated by a neural network, as a result of the multi-agent deep reinforcement learning, a trained multi-agent neural network is provided.

The trained multi-agent module can be applied to test image data to detect landmarks of the test image data. In such a process, the trained multi-agent module applies each of a plurality of agents (each trained to detect a given landmark in the test image data) to a respective one of a plurality of sub-regions of the test image data to calculate a plurality of sets of action values. Each of the sets of action values correspond to one of the sub-regions, and each of the action values correspond to a respective movement of a predetermined set of movements $\{x_+, x_-, y_+, y_-, z_+, z_-\}$ of the sub-region that the respective agent is configured to perform.

Each agent determines an action to be performed by the agent based on the set of action values calculated by the agent. For example, if, for a given agent, the highest calculated action value is for the movement '$x_+$', then the agent may determine to move the sub-region associated with the agent one incremental unit or step along the positive direction of the x axis. In some instances, the agent may instead choose to perform a random movement of the sub-region associated with the agent. This may allow for random exploration to be incorporated within the movement of the sub-region.

Each agent performs the action determined by the agent. In this way, each agent (that is, the sub-region associated with each agent) can move through the image data according to the agent's training. By repeating this process iteratively each agent (that is, the sub-region associated with each agent) can move to be located at the position of the landmark within the image data that the agent is trained to detect.

However, the inventors have appreciated that there can be problems associated with the application of such a trained multi-agent module to image data. For example, medical images, such as those produced by ultrasound imaging, are prone to having regions where little or no image data is present. It can be difficult for a trained agent applied to such a region to reliably determine an action to perform. As such, the performance of the agent in detecting the landmark may be poor. The inventors have observed that in some cases, an agent may become 'stuck' in a region where little or no image data is present and be unable to detect a landmark. As such, the reliability or robustness of the agent with respect to landmark detection in medical image data can be poor. As detailed hereinafter, the invention addresses these problems as well as others.

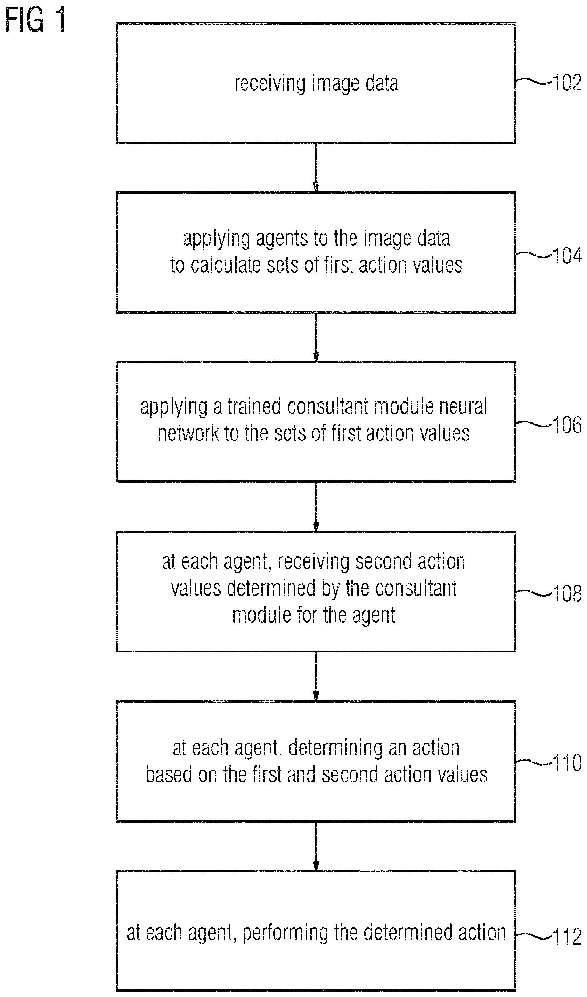

Referring to Figure 1, there is schematically illustrated a flow diagram of a computer-implemented method for detecting one or more landmarks of a medical image.

In broad overview, the method comprises the following:

- in step 102, receiving image data representing the medical image;

- in step 104, a trained multi-agent module applying each of a plurality of agents to a respective one of a plurality of sub-regions of the image data to calculate a plurality of sets of first action values (e.g. as described above);

- in step 106 applying a trained consultant module neural network to the plurality of sets of first action values to determine, for each of the plurality of agents, based on the plurality of sets of first action values, one or more second action values, where each of the one or more second action values corresponds to a movement of the predetermined set of movements of the sub-region that the agent is configured to perform;

- in step 108, at each of the plurality of agents: receiving the one or more second action values determined for the agent by the trained consultant module neural network;

- in step 110, at each of the plurality of agents: determining, based on the obtained one or more second action values, and based on the set of first action values calculated by the agent, an action to be performed by the agent; and

- in step 112, at each of the plurality of agents, performing the determined action thereby to move the sub-region associated with the agent.

In some examples, the method further comprises repeating the steps 104 to 112 iteratively such that the sub-region associated with each agent moves to a landmark that the agent is trained to detect, thereby to detect one or more landmarks of the image data. It should be noted that performing steps 104 to 112 for example only once would nonetheless result in the sub-region associated with each agent moving towards (or moving on a path towards) the landmark that the agent is trained to detect and as such to allow for landmark detection.

According to the method, the action performed by a given agent is based not only on the first action values calculated by the agent but also on the second action values, which are determined by the trained consultant module in view of the sets of first action values of all of the agents. For example, the consultant module neural network having an overview of the plurality of sets of first action vales may determine from its training second action values (e.g. suggested action values) that indicate to each agent those actions that, according to the consultant module, will maximize the probability of the agent moving toward its associated landmark. The action to be performed being determined based additionally on the second action values may therefore allow the performance of each agent to be improved (for example may be more reliable and/or more robust) as compared to if the agent were to determine the action based on the set of first action values alone.

For example, the action to be performed being determined based also on the second action values may help prevent the situation where a first agent becomes 'lost' in a region of the image data where there is little or no useful data on which the first agent can act. For example, the consultant module neural network, through its training, may determine that given the first action values of a first agent show no preference for any particular movement and given the first action values of a second agent show a strong preference for, say, an $x_+$ movement, then providing a first agent with second action values that indicate a strong preference for, say, $x_-$ movement, and providing the second agent with second action values that indicate a strong preference for, say, $x_+$ movement, will likely result in the first agent and the second agent moving closer to the respective landmarks that each is trained to detect. By taking into account the second action values (e.g. action suggestions or suggested action values) calculated by the trained consultant module, the performance of each agent may be improved, and may be robust and reliable.

Further, the trained consultant module determines the one or more second action values for each agent based on the plurality of sets of first action values calculated by each trained agent of the trained multi-agent module. The consultant module neural network and the multi-agent module (for example implemented as a multi-agent neural network) therefore need not have been trained together (i.e. as one). Accordingly, the landmark detection is provided for efficiently, for example as compared to a multi-agent technique in which a centralized Q function is trained based on an aggregation of all agent states, which is memory intensive.

For example, medical images, such as 3D ultrasound images, typically consist of a relatively large amount of data. In such cases, the state associated with the agent may consist of a relatively large amount of data, for example a 3-dimensional sub-region of the image data. A multi-agent technique that aggregates the states of each agent for the learning of a centralized Q function would therefore involve a large memory cost, and as such would be inefficient. In contrast, the consultant module neural network and the multi-agent module (e.g. implemented as a multi-agent neural network) of the present invention may be separate neural networks and need not have been trained together (i.e. as one), and hence the memory burden for the training is relatively low, and hence the landmark detection can be provided for in an efficient manner.

In some examples, the method may further comprise outputting, for each agent, information indicating the location, within the image data, of the sub-region associated with the agent, thereby to indicate a location of the detected one or more landmarks. For example, the multi-agent module may be configured to output an x,y,z coordinate of the sub-region associated with each agent. This may allow for a representation of the sub-region to be displayed with (e.g. overlaid on) the medical image, for example on a display device such as a computer screen. This may allow for a clinician to readily identify the landmarks of the medical image, and thereby may provide guidance to the clinician in making a diagnosis, for example.

The multi-agent module is trained by multi-agent deep reinforcement learning, for example in the manner described above. In some examples, as described above, the function applied to the image data by each agent to calculate the first action values may be approximated by a neural network. Accordingly, in some examples, the multi-agent module may be a multi-agent neural network, for example as described above. In some examples, each agent of the plurality of agents is trained, using deep reinforcement learning, separately to each other of the plurality of agents.

Similarly to as described above, each first action value calculated by each agent corresponds to a respective movement of a predetermined set of movements $\{x_+, x_-, y_+, y_-, z_+, z_-\}$ of the sub-region that the respective agent is configured to perform. Each of the sets of first action values correspond to one of the sub-regions, and each agent is trained to detect a given landmark in the image data. Similarly to as described above, each calculated first action value may represent a probability that, for the given image data included in the sub-region, the movement of the sub-region will result in the sub-region moving closer to the target landmark for that agent.

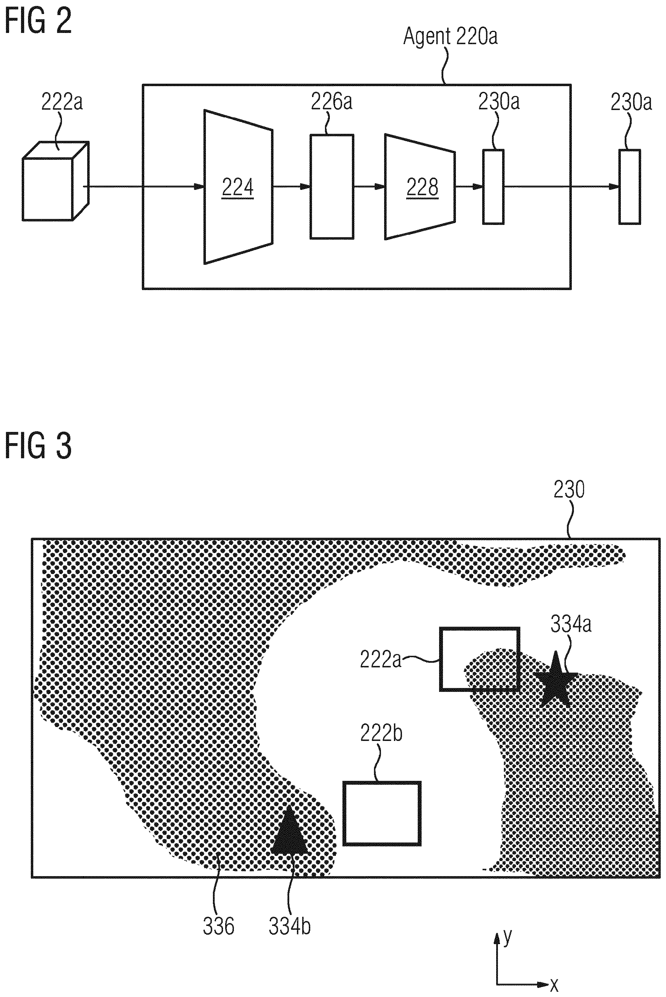

Referring to Figure 2, there is illustrated schematically an example agent 220a. The example agent 220a of Figure 2 may be used as any one of or each of the plurality of agents of the trained multi-agent module described above with reference to Figure 1. The agent 220a may have been trained as part of the multi-agent deep reinforcement learning described above. The agent 220a comprises an encoding unit 234 and a decision unit 228. The agent 220a may take the form of a convolutional neural network, and the encoding unit 224 and/or the decision unit 228 may take the form of convolutional layers of the convolutional neural network. The encoding unit 224 and the decision unit 228 may together constitute the approximation of the function (also referred to as a Q function) learned by the agent 220a during the reinforcement learning.

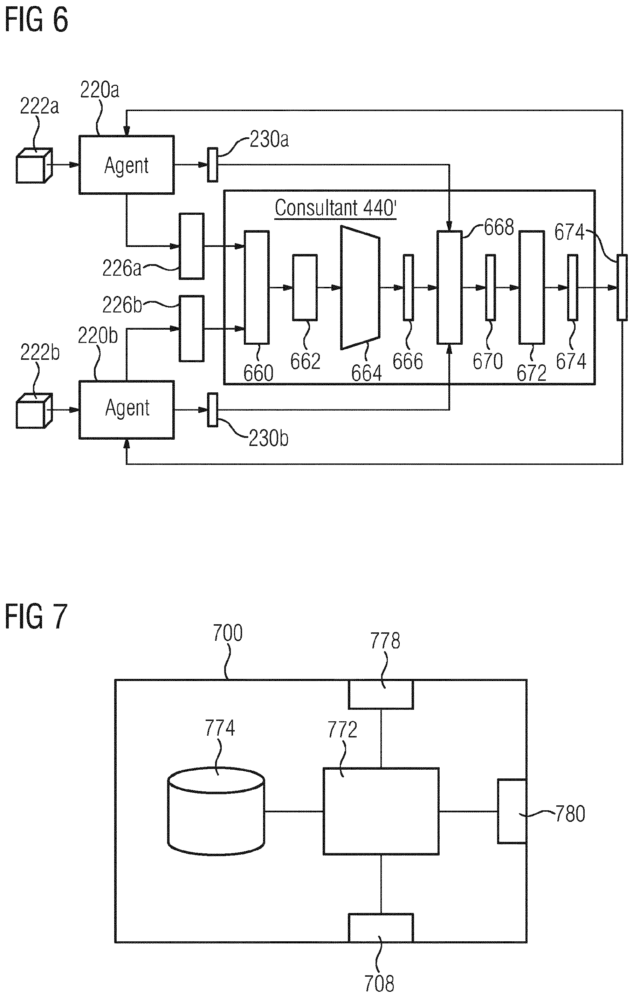

The agent 220a takes as input the image data of the sub-region 322a associated with the agent 220a. In this example, the image data is 3D image data and the sub-region 322a is a sub-volume 322a of the image data. The image data is provided to the encoding unit 224. The encoding unit 224 encodes the image data into image features 322a. For example, the encoding unit 224 may map the image data to a vector in a feature space that has dimensionality lower than that of the image data. This may help the agent 220a to function more efficiently. In some examples, the encoded features 226a may also be used by a consultant module (described in more detail below with for example with reference to Figure 6). The feature space and the mapping by the encoding unit 224 of image data onto image features may be learned as part of the reinforcement learning described above.

The encoded features 226a are input into the decision unit 228. The decision unit 228 calculates a set of first action values 230a each corresponding to a respective movement of a predetermined set of movements $\{x_+, x_-, y_+, y_-, z_+, z_-\}$ of the sub-region 222a that the agent 220a is configured to perform.

For example, the set of first action values 230a may take the form of a column vector 230a listing the first action values calculated for each movement of the predetermined set of movements arranged in a predetermined order, for example in the order $\{x_+, x_-, y_+, y_-, z_+, z_-\}$.

The calculated set of first action values 230a may be output by the agent 220a, for example for use by the consultant module neural network. Each agent of the plurality of agents may calculate a set of action values in the same way as described with reference to Figure 2. The multi-agent neural network applied to the image data may therefore calculate a plurality of sets of first action values.

In some examples, the medical image may be an image resulting from a scan of a patient. For example, the medical image may be an ultrasound image, for example a cardiac ultrasound image. In other examples, the medical image may be a different type of medical image, for example a Computed Tomography (CT) image, or a Magnetic Resonance Imaging (MRI) image.

In some examples, the medical image may be a two-dimensional (2D) image. In other examples, the medical image may be a three-dimensional (3D) image.

In examples where the medical image is a 2D image, the image data may comprise 2D data. For example, the image data may comprise the 2D position and pixel value of each pixel of the 2D image. In examples where the medical image is a 3D image, the image data may comprise 3D data. For example, the image data may comprise the 3D position and voxel value of each voxel of the 3D image.

In some examples, the method is for detecting a plurality of landmarks of a medical image. For example, each landmark of the plurality of landmarks may be of a different type. Each agent may have been trained to detect a respective different landmark type. For example, a first agent may be trained to detect a landmark of a first type, and a second agent may be trained to detect a landmark of a second, different, type. In some examples, the medical image may be a cardiac ultrasound image, and the landmarks may be anatomical landmarks of the heart.

Referring to Figure 3, there is illustrated schematically an example medical image 330. In this example, the medical image 330 is a 3D image 330 but only a 2D projection is shown for clarity. The image 330 comprises voxels 336, each having a 3D position and a voxel value. In this example, the image data representing the image 330 comprises the 3D position and the voxel value of each voxel 336 of the image 330.

In the example of Figure 3, there is a first sub-region 222a associated with a first agent (not shown in Figure 3) and a second sub-region 222b associated with a second agent (not shown in Figure 3) of the plurality of agents. Each sub-region 222a, 222b may correspond to a sub-volume of the 3D image data.

In the example of Figure 3, the first agent is trained to detect a first landmark 334a of a first type, and the second agent is trained to detect a second landmark 334b of a second, different, type. The image 330 may be an 3D cardiac ultrasound, and the first landmark 334a in the image data 336 may be the right trigone of a human heart and the second landmark 334b may be the left trigone of the human heart.

The first agent associated with the first sub-region 222a may calculate a set of first action values each corresponding to a respective movement of a predetermined set of movements $\{x+, x-, y+, y-, z+, z-\}$ of the first sub-region 222a that the first agent is configured to perform. For example, the first agent may calculate, given the image data within the sub-region 222a, a set of first action values in which the highest action value is given for the movement corresponding to $x_+$. On the other hand, the second agent may calculate, given the image data within the sub-region 222b which is mostly blank, a set of action first values in which the action values are low for all movements.

As mentioned, the method comprises applying a trained consultant module neural network to the plurality of sets of first action values calculated by the agents of the trained multi-agent module. The trained consultant module neural network determines, for each of the plurality of agents, based on the plurality of sets of first action values, one or more second action values.

In some examples, the consultant module neural network has been trained using supervised learning. Supervised learning is a type of machine learning in which a function (approximated by a neural network) is learnt that maps an input to an output based on example training data.

For example, input training data for the supervised learning may comprise first action values calculated by each of a plurality of agents of a trained multi-agent module (e.g. as similarly to as described above) applied to training image data. For example, the training image data may comprise a medical image in which the ground-truth location of the one or more landmarks that the agents are trained to detect is labelled. Output training data for the supervised learning may comprise second action values calculated for each agent by the consultant module neural network (e.g. similarly to as described above - those determined based on the plurality of sets of first action values). A supervision signal for the supervised learning may comprise, for each agent, the ground truth location of the landmark within the training image data that the agent is trained to detect.

For example, the supervision signal may comprise an indication of whether or not, for each agent, the second action values output by the consultant module neural network indicate a movement of the associated sub-region towards the ground truth location of the landmark that the agent is trained to detect. For example, the supervision signal may comprise, for each agent, an indication of whether or not the largest of the determined second action values corresponds to a movement towards the ground truth location of the landmark that the agent is trained to detect. For example, for each agent, if the second action values output by the consultant module neural network indicate a movement of the associated sub-region towards the ground truth location of the landmark that the agent is trained to detect, then this instance may be used to (positively) contribute to the setting of the weights of the consultant module neural network.

This process may be repeated many times for many example instances of the multi-agent module applied to labelled training image data and/or for many different labelled training images. In such a way, the consultant module neural network learns to determine, for each of a plurality of agents, and given a plurality of sets of first action values from all the agents, second action values that, if used by the agent, would maximize the probability that the agent moves towards the landmark that it is trained to detect.

As mentioned above, the action performed by each agent is based on both the first action values calculated by the agent and one or more second action values determined for the agent by the trained consultant module neural network.

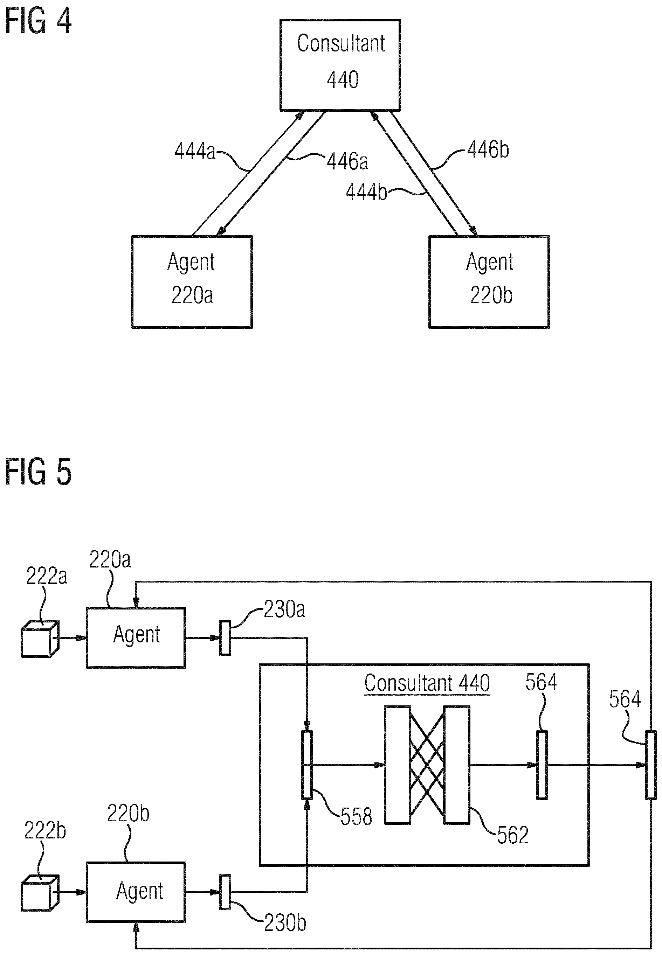

Referring to Figure 4, there is illustrated a schematic diagram of the interaction between a consultant module neural network 440 and the agents 230a, 230b of a multi-agent module, according to an example. Although only two agents 220a, 220b are shown in Figure 4 it will be appreciated that any number (i.e. N, where N is a positive integer) could be used. As represented by arrows 444a and 444b, a first set of first action values calculated by a first agent 220a is communicated to the consultant 440 and a second set of first action values calculated by a second agent 220b is communicated to the consultant 440, respectively. Similarly, as represented by arrows 446a and 446b, one or more second action values determined by the consultant 440 for the first agent 220a are communicated from the consultant 440 to the first agent 220a and one or more second action values determined by the consultant 440 for the second agent 220b are communicated from the consultant 440 to the second agent 220b. In some examples, the consultant neural network 440 and the multi-agent module (which may be a multi-agent neural network) may be implemented on the same processing device in which case communication between them may comprise passing the values between parts of code implemented by the device, for example via a memory such as a Random Access Memory (RAM) of the device. In other examples the consultant neural network 440 and the multi-agent module may be implemented on different processing devices or different parts of the same computer in which case communication between them may comprise transmitting and receiving the values over wired or wireless connections, for example over a network.

In some examples, the consultant module 440 may determine, for each agent 220a, 220b, a set of second action values, one second action value for each movement of the predetermined set of movements {x+, x-, y+, y-, z+, z-} of the sub-region that the agent 220a, 220b is configured to perform. The action to be performed by each agent 220a, 220b may be determined, for each agent, based on a combination of the second action value and the first action value for each movement of the predetermined set of movements {x+, x-, y+, y-, z+, z-}. For example, determining the action to be performed may comprise, at each agent 220a, 220b, for each movement of the predetermined set of movements {x+, x-, y+, y-, z+, z-}, performing a weighted sum of the second action value associated with the movement and the first action value calculated for the movement.

For example, for each agent i, the first set of action values may be represented by a 6x1 vector $F_i$ where each value is associated with a respective movement of the predetermined set of movements {x+, x-, y+, y-, z+, z-}. For example, for a given first agent 220a, the vector $F_i$ may be {0.4; 0.2; 0.3; 0.1; 0.2; 0.0}. For each agent i the second set of action values may be represented by a 6x1 vector $C_i$ where each value is associated with a respective movement of the predetermined set of movements {x+, x-, y+, y-, z+, z-}. For example, for the first agent 220a, the vector $C_i$ may be {0.9; 0.1; 0.2; 0.0;

0.0; 0.0}. For each agent $i$, a weighted sum $W_i$ of $F_i$ and $C_i$ may then be calculated using the equation $W_i = a \times F_i + b \times C_i$; where $a$ and $b$ are constants. For example, if a were 0.4 and $b$ where 0.6, then in this example for the first agent 220a the weighted sum vector $W_i$ would be {0.7; 0.1; 0.2; 0.0; 0.1; 0}. The constants $a$ and $b$ can be set according to the weight desired to be given to the second action values determined by the consultant. The constants may be chosen as those constants that optimize performance of the landmark detection (e.g. as determined by suitable testing), for example for a particular application environment (e.g. the type of image to be processed).

In some examples, for each agent, determining the action to be performed by the agent may comprise determining the movement of the predetermined set of movements that has the largest weighted sum. For example, in the above example, for the first agent 220a the largest weighted sum is 0.7 which corresponds to the movement x+. The first agent 220a may therefore determine the movement to be performed is x+ (i.e. one incremental step or unit in the positive x direction), and as such may move its associated sub-region one incremental step or unit in the positive x direction.

In other examples, the consultant module 440 may determine one, or two, or a few second action values for each agent 220a, 220b. For example, for each agent 220a, 220b, the consultant module neural network 440 may calculate a set of candidate second action values, one candidate second action value for each movement of the predetermined set of movements {x+, x-, y+, y-, z+, z-} of the sub-region that the agent is configured to perform, similarly to as described above. The consultant module 440 may determine as the one or more second action values the largest or largest few candidate second action values. In these examples, the action to be performed by each agent may be determined, for each agent, by combining the second action values with the first action values. For example, the values may be combined in the way described above using a weighted sum, but assigning to those movements for which a second action value has not be determined a nominal second action value of 0. As another example, those movements for which a second action value has not be determined may be discarded by the agent as movements not to be performed.

In any case, each agent performs the determined action thereby to move the sub-region associated with the agent. As such, the sub-region associated with each agent moves towards the landmark (or moves on a path towards the landmark) that the agent is trained to detect. This is achieved based not only on the first action values calculated by the agent, but also on the second action values calculated for the agent by the consultant module neural network based on the consultant module's training to maximise the probability of moving the sub-regions associated with all agents towards their respective landmarks - in other words based on maximising a representation of team achievement. This may allow for improved or more robust performance of the multi-agent module as compared to if the second action values were not taken into account.

Determining a set of second action values (e.g. one for each movement of the predetermined set of movements {x+, x-, y+, y-, z+, z-} of the sub-region that the agent 220a, 220b is configured to perform) for each agent may allow for the agent to be provided with a full picture of the consultant module's determination of which movements are likely to lead to landmark detection and which are not. This may allow each agent's decision as to which action to perform to be better informed, and hence may allow for more robust and/or faster landmark detection. Providing the set of second action values in this way may also allow each agent to determine the action to be performed in a computationally efficient way, e.g. by a weighted sum of the first and second action values.

The quality of the second action values produced (e.g. the confidence or probability that the second action values for an agent will indicate a movement towards the landmark that the agent is trained to detect) may be improved in the case where each agent is trained to detect a landmark of a different type. Landmarks of different types may have particular and/or commonly occurring spatial relationships that the consultant module neural network may learn inherently through its training. This may be used by the consultant module neural network, in combination with the confidence (as expressed by the first action values) of a first agent to move in a certain direction, to produce with more confidence second action values for a second agent.

For example, referring again briefly to Figure 3, a first agent associated with a first sub-region 222a may be trained to detect a right trigone 334a in a cardiac ultrasound image 330 and a second agent associated with a second sub-region 222b may be trained to detect a left trigone 334b in the cardiac ultrasound image 330. The first sub-region 222a may happen to contain useful data whereas the second sub-region 222b may happen to contain little or no useful data. The first agent may calculate a set of first action values that indicates a strong preference for movement in the x+ direction (i.e. movement to the right in the sense of Figure 3). The second agent may calculate a set of first action values that do not indicate a preference for movement in any particular direction. The plurality of sets of action values may be communicated to the consultant module. The consultant module may determine, from its training, that when a first agent trained to detect a right trigone produces first action values that indicate a strong preference for movement in the x+ direction (i.e. movement to the right in the sense of Figure 3), and where the second agent produces first action values indicating no particular preference, then the second action values calculated for the second agent trained to detect the left trigone should indicate a strong preference for movement in the x- direction (i.e. movement to the left in the sense of Figure 3). The second agent determines an action to perform based in part on these second action values, and may, for example as a result of the procedure described above, consequently perform a movement of its associated sub-region 222b in the x- direction (i.e. movement to the left in the sense of Figure 3) towards the left trigone 334b that it is trained to detect. The probability that the second agent moves the second sub-region 222b towards the left trigone 334b is therefore increased as compared to if the second agent were acting on the first action values alone. The consultant module may determine in this example that the second action values for the first agent should not indicate any particular preference or should indicate a movement of the first sub-region 222a in the x+ direction, for example. The first agent may therefore move the first sub-region 222a in the x+ direction, towards the right trigone 334a that it is trained to detect. Accordingly, use of the second action values may allow the probability that all agents (i.e. the team of agents) move their associated sub-regions 222a, 222b towards the landmarks 224a, 334b that they are respectively trained to detect, to be maximised. Accordingly, the speed with which the plurality of agents are able to detect their associated landmarks may be increased (e.g. the number of incremental movements needed to detect a landmark may be reduced), and/or the probability that all of the agents detect their associated landmarks is improved.

As mentioned, the trained consultant module neural network determines the second action values based on the plurality of sets of first action values calculated by each agent.

In some examples, a combination of the sets of first action values may be determined, and the second action values may be determined based on the combination of the sets of first action values. For example, the method may comprise concatenating the sets of first action values calculated by the agents. For example, the set of first action values for a given agent may be in the form of a vector whose entries indicate the first action values calculated for the predetermined set of movements {x+, x-, y+, y-, z+, z-} arranged in a predetermined order, for example as described above. The concatenation may comprise concatenating such vectors in a predetermined order. The trained consultant module neural network may then determine the one or more second action values for each of the plurality of agents based on the concatenation of the sets of first action values.

In some examples the trained consultant module neural network may be trained to transform a combination of the sets of first action values obtained for each agent into a combination of the second action values determined for each agent. For example, the combination of the sets of first action values may comprise the concatenation of the sets of first action values, for example as described above. The combination of the second action values may be in the form of a vector whose entries indicate the second action values determined for each of the predetermined set of movements {x+, x-, y+, y-, z+, z-}, for each of the plurality of agents, in a predetermined order. For example, the vector may comprise the second action values for each of the predetermined set of movements for a first agent in a predetermined order {x+, x-, y+, y-, z+, z}, followed by the second action values for each of the predetermined set of movements for a second agent in a predetermined order {x+, x-, y+, y-, z+, z-}, and so on for each of the plurality of agents. This may allow for the second action values to be determined and output in a computationally efficient manner, for example as a single vector that can be supplied to each of the agents.

Referring to Figure 5, there a schematic diagram illustrating the interaction between a consultant module 440 and two agents 220a, 220b of a trained multi-agent module according to an example. In this example, the consultant module neural network comprises fully connected layers 562. The consultant module neural network 440 of Figure 5 may be used as the consultant module in the method described above with reference to Figures 1 to 4.

In this example, a first agent 220a is applied to image data of a first sub-volume 222a, and a second agent 220b is applied to image data of a second sub-volume 222b. The first agent 220a calculates a first set of first action values 230a, and the second agent 220b calculates a second set of first action values 230b. For example, the first and second agents 220a, 220b may calculate the sets of first action values 230a, 230b, respectively, according to any of the examples described above with respect to Figures 1 to 4. The sets of action values 230a, 230b are communicated to the consultant module 440.

In this example, the consultant module 440 combines the first and second sets of first action values 230a, 230b into a single input vector 558 by concatenation, for example as described above.

In this example, consultant module 440 comprises a neural network comprising fully connected layers 562. The fully connected layers 562 are trained to transform the combination of the sets of first action values 558 into a combination of the second action values 564. Specifically, the fully connected layers 562 are trained to transform the input vector 558 into an output vector 564. The output vector 564 comprises the second action values, for each of the predetermined set of movements, for each of the plurality of agents, in a predetermined order, for example as described above.

In this example, the output vector 564, comprising the sets of second action values, is communicated to each agent 220a, 220b. Each agent 220a, 220b may then determine an action to be performed based in part on the output vector 564. For example, the first agent 220a may extract the second action values determined for the first agent 220a from the output vector 564 and determine the action to be performed by the first agent 220a based on the extracted second action values, and the second agent 220b may extract the second action values determined for the second agent 220b from the output vector 564 and determine the action to be performed by the second agent 220b based on the second action values extracted. For example, each agent may know which entries to extract because the second action values are included in the output vector 564 in the predetermined order known to each agent.

In other examples, the consultant module 440 may split the output vector 564 into vectors (not shown) indicating the sets of second action values determined for each agent and communicate the respective vector (not shown) to the respective agent 220a, 220b.

As mentioned with reference to Figure 2, in some examples the multi-agent module may be a multi-agent neural network, and each agent may calculate for the sub-region to which the agent is applied a set of encoded features representing the sub-region of the image data. In some examples the sets of encoded features may be used by the consultant module. Specifically, in some examples the trained consultant module neural network may determine the one or more second action values for each of the plurality of agents based additionally on the sets of encoded features.

Determining the second action values for each agent based additionally on the sets of encoded features may improve the quality of the second action values - i.e. may improve the probability that for each agent, the second action values correctly indicate or suggest movement towards the associated landmark. This may in turn provide for overall faster and/or more robust landmark detection. In these examples the consultant module neural network has knowledge of the encoded features on the basis of which the first action values were calculated by each agent. The additional encoded features information contextualises the first action values for the consultant module neural network, which may therefore provide second action values of improved quality (e.g. more likely to be appropriate given the encoded features context).

In these examples, the trained consultant module neural network has been trained additionally using such sets of encoded features as training data. For example, similarly to as described above, the consultant module neural network may have been trained using supervised learning. In these examples, the input training data for the supervised learning may comprise first action values and encoded features from each of a plurality of agents of a trained multi-agent neural network applied to training image data. For example, the training image data may be a medical image in which the ground-truth locations of the landmarks that the agents are trained to detect are labelled. Output training data for the supervised learning may comprise second action values calculated for each agent by the consultant module neural network. A supervision signal for the supervised learning may comprise, for each agent, the ground truth location of the landmark within the training image data that the agent is trained to detect. For example, similarly to as described above, the supervision signal may comprise an indication of whether or not, for each agent, the second action values output by the consultant module neural network indicate a movement of the associated sub-region towards the ground truth location of the landmark that the agent is trained to detect. This process may be repeated many times for many example instances of the multi-agent neural network applied to labelled training image data and/or for many different labelled training images. In such a way, the consultant module neural network learns to determine, for each of a plurality of agents, given a plurality of sets of first action values and a respective plurality of sets of encoded features from all the agents, second action values that, if used by the agent, would maximize the probability that the agent moves towards the landmark that it is trained to detect.

As mentioned, the feature space onto which the encoded features are mapped has dimensionality lower than that of the image data. Therefore, training the consultant module neural network based on the encoded features may be more efficient (e.g. less memory intensive) for example as opposed to training based on the image data itself. Accordingly, the improved quality second action values may be provided for relatively efficiently.

In some examples, the consultant module neural network determines the second action values based on a combination of the set of first action values and the encoded features of each agent. For example, the consultant module neural network may transform the sets of encoded features to a first vector of dimension equal to that of a second vector resulting from a concatenation of the sets of first action values. For example, this may be performed by convolutional layers of the consultant module neural network. The method may then comprise performing an element wise sum of the first vector and the second vector to produce a third vector. The trained consultant module neural network may then determine the one or more second action values for each of the plurality of agents based on the third vector. For example, the trained consultant module neural network may comprise fully connected layers trained to transform the third vector into a fourth vector representing the determined second action values for all of the agents. Each entry of the fourth vector may be associated with a given movement of the predetermined set movements of a given agent. The convolutional layers and the fully connected layers of the consultant module neural network may be trained together, for example using supervised learning described above.

Referring to Figure 6, there is a diagram illustrating schematically the interaction between a trained consultant module neural network 440' and two agents 220a, 220b of a trained multi-agent module according to an example. In this example, the trained multi-agent module is implemented as a trained multi-agent neural network, for example as described above. In this example, the trained consultant module neural network 440' determines second action values 674 based additionally on encoded features 226a, 226b calculated by each agent 220a, 220b. The consultant module neural network 440' of Figure 6 may be used as the consultant module neural network in the method described above with reference to Figures 1 to 4.

In this example, the consultant module neural network comprises a concatenation unit 660, a convolution unit 664, a summing unit 668 and fully connected layers 672. The convolution unit 664 may comprise convolutional layers.

In this example, a first agent 220a is applied to image data of a first sub-volume 222a, and a second agent 220b is applied to image data of a second sub-volume 222b. The first agent 220a calculates a first set of encoded features 226a and a first set of first action values 230a, and the second agent 220b calculates a second set of encoded features 226b and a second set of first action values 230b. For example, the first and second agents 220a, 220b may calculate the sets of first action values 230a, 230b, and the sets of encoded features 226a, 226b, respectively, according to any of the examples described above, for example with reference to fig- ure 2. The sets of action values 230a, 230b, and the sets of encoded features 226a, 226b, are communicated to the consultant module 440'.

The sets of encoded features 226a, 226b are communicated to the concatenation unit 660. The concatenation unit 660 concatenates the sets of encoded features 226a, 226b into a single set of encoded features 662. As described above, the sets of encoded features may be in the form of a vector in a feature space that has dimensionality lower than that of the image data. The concatenation 662 of of the sets of encoded features 226a, 226b may comprise a concatenation of the associated vectors.

The convolution unit 664 takes as input the concatenation 662 of the sets of encoded features 226a, 226b. The convolution unit 664 transforms the concatenation 662 to a first vector 666 of dimension equal to that of a second vector (not shown) resulting from a concatenation of the sets of first action values 230a, 230b. For example, in the case where there are two agents, each agent 220a, 220b may calculate a set of six first action values (one for each movement of the predetermined set of movements {x+, x-, y+, y-, z+, z-}), and hence a concatenation of these sets of first action values 230a, 230b may result in a 12x1 column vector. In this case, the convolution unit 664 is trained to transform the concatenation 662 of the encoded features 226a, 226b into a first vector 666 that is a 12x1 column vector.

The summing unit 668 takes as input the first vector 666 and the sets of first action values 230a, 230b. The summing unit concatenates the first action values 230a, 230b into a second vector (not shown in Figure 6). For example, the concatenation of the sets of first action vales 230a, 230b may be the same or similar to as described above with reference to Figure 5. The summing unit 668 combines the first vector 666 and the second vector (not shown in Figure 6) to produce a third vector 670. Specifically, the summing unit 668 performs an element wise sum of the first vector 666 and the second vector (not shown) to produce a third vector 670. For example, in the case where the first vector 666 and the second vector are both 12x1 vectors, the third vector 670 is also a 12x1 column vector, where each element is a sum of the corresponding element of the first vector 666 and the corresponding element of the second vector.

The fully connected layers 672 take as input the third vector 670. The fully connected layers 672 are trained to transform the third vector 670 into a fourth vector 674 representing the determined second action values for all of the agents. Each entry of the fourth vector 674 may be associated with a given movement of the predetermined set movements {x+, x-, y+, y-, z+, z-} of a given agent. For example, the fourth vector 674 may be a 12x1 column vector where the first six entries are the second action values determined for each of the movements {x+, x-, y+, y-, z+, z-} for the first agent 220a, and the second six entries are the second action values determined for each of the movements {x+, x-, y+, y-, z+, z-} for the second agent 220b. The convolutional layers of the convolution unit 664 and the fully connected layers 672 of the consultant module neural network may be trained together, for example using supervised learning as described above.

The fourth vector 674, comprising the second action values, is communicated to the first agent 220a and the second agent 220b. The agents 220a, 220b may each extract from the fourth vector 674 the second action values determined for them (e.g. by a knowledge of the predetermined order in which the second action values appear in the fourth vector 674). Each agent 220a, 220b may then use the second action values to determine the action to perform. Each agent 220a, 220b may then perform the determined action, i.e. move the sub-region 222a, 222b associated with the agent 220a, 220b through the image data in the determined direction. Once the sub-region 222a, 222b has been moved, the process may be applied again but this time on the image data at the new location of the sub-region 220a, 220b. This process may be repeated iteratively until each sub-region 220a, 220b is located at the landmark that the associated agent 220a, 220b is trained to detect. For example, if the sub-region does not move beyond a certain distance in a predetermined number of time steps, it may be determined that the associated agent has detected the landmark and hence that the process may end.

In some examples, the consultant module neural network 440, 440' is trained in advance and may be stored for use in the example methods of detecting landmarks described above with reference to Figures 1 to 6. In other examples, the training of the consultant module neural network 440, 440' may be part of the example methods of detecting landmarks described above with reference to Figures 1 to 6. In either case a computer implemented method for providing a or the trained consultant module neural network 440, 400' comprises: receiving input training data, receiving output training data, training the consultant module neural network 440, 400' based on the input training data and based on the output training data, and providing the trained consultant module neural network 440, 440'. The input training data comprises a plurality of sets of first action values, each of the plurality of sets of first action values having been calculated by a respective one of a plurality of agents of a trained multi-agent module applied to a respective one of a plurality of sub-regions of training image data, each of the sets of first action values corresponding to one of the sub-regions, each of the first action values corresponding to a movement of a predetermined set of movements of the sub-region that the respective agent is configured to perform, each agent being trained to detect a given landmark in the training image data. The output training data comprises one or more second action values output by the consultant module neural network for each agent, the one or more second action values corresponding to, for each agent, a movement of the predetermined set of movements of the sub-region that the agent is configured to perform, the second action values being determined by the consultant module neural network based on the plurality of sets of first action values. In examples, the input training data and the output training data may be the same as described above with reference to Figures 5 or 6. In particular, in examples, the input training data comprises the encoded features calculated by each of the agents. In examples, the training is by supervised learning, and the supervision signal may be the same as described above with reference to Figures 5 or 6.

According to the training method, the training of the consultant module neural network is separate to the training of the multi-agent module (e.g. multi-agent neural network). That is, the consultant module neural network need not be trained as one with the multi-agent module (e.g. multi-agent neural network). The training is therefore performed efficiently (e.g. with relatively little memory burden). This is for example as compared to a multi-agent technique in which a centralized Q function is trained based on an aggregation of all agent states, which is memory intensive. Further, in examples where the input training data comprises encoded features, the training is performed efficiently (e.g. with relatively little memory burden) for example as compared to if instead the image data were used as input training data.

Referring to Figure 7, there is illustrated schematically a computer system 700 according to an example. The computer system 700 may be configured to perform any one or combination of the example methods described above. The computer system 700 comprises a processor 772, a memory 774. In examples, the computer system may further comprise a first interface 776, a second interface 778, and a third interface 780. The processor 772 is communicatively coupled to the memory 744. In examples, the processor 772 is also communicatively coupled to the first interface 776 the second interface 778 and the third interface 780. The memory 774 may store instructions which when executed by the processor 772 cause the computer system 700 to perform any one or combination of the example methods described above with reference to Figures 1 to 6. A program may be provided which when executed on the processing computer 700 causes the computer system 700 to perform any one or combination of the example methods described above with reference to Figures 1 to 6. The program may be stored on or in a computer readable medium.

As an example, the computer system 700 may be used to implement a method of detecting one or more landmarks of a medical image. In this case, the first interface 776 may be configured to receive image data representing the medical image. The processor, or computation unit, 772 may be configured to perform the steps of any one or combination of the example methods of detecting landmarks described above with reference to Figures 1 to 6. In examples, the process or may be configured to determine for each agent, information indicating a location, within the image data, of the sub-region associated with the agent. In examples, the second interface 778 may be configured to output, for each agent, information indicating a location, within the image data, of the sub-region associated with the agent.

Alternatively or additionally, the computer system 700 (or a computer system of this type) may be used to implement a method of providing a trained consultant module neural network. In this case, the first interface may be a first training interface 776 configured to receive input data, the second interface may be a second training interface 778 configured to receive output training data, the processor, or training computation unit 772, may be configured to train the consultant module neural network based on the input training data and based on the output training data (for example according to any of the training methods described above with reference to Figures 1 to 6), and the third interface may be a third training interface 780 configured to provide the trained consultant module neural network.

The methods and apparatuses described herein provide for automated landmark detection in medical images that has good performance and/or is robust and/or reliable, for example as compared to multi-agent modules in which agents perform actions based on the first feature values alone. This may be useful in medical images, especially for example ultrasound images, which are prone to having large areas of little or no useful data, and hence in which an agent may otherwise get 'stuck'. Each agent determining the action to perform based on both the set of first action values calculated by the agent and the second action values calculated for the agent by the consultant module neural network allows for the landmark detection to benefit from both the experience gained by the agent in detecting the given landmark during the reinforcement learning and the experience gained by the consultant module in directing agents to given landmarks during the training (e.g. supervised learning) of the consultant module. Moreover, the improved automated landmark detection is provided in an efficient way, for example as compared to if a centralized Q function were trained based on an aggregation of the agent states. This may be useful in medical images, for example 3D medical images, which comprise large amounts of data. In examples where the determination of the second feature values is based additionally on the encoded features of the image data, the quality of the second feature values may be improved, which may in turn provide for faster and/or more robust landmark detection, for example as compared to using first action values alone to determine the second action values. Moreover, this is provided for in an efficient way (e.g. with reduced memory burden), for example as compared to basing the determination of the second feature values on the image data itself. This may be useful in medical images, for example 3D medical images, which comprise large amounts of data.

**Claims**

1. A computer-implemented method for detecting one or more landmarks (334a, 334b) of a medical image (330), the method comprising:

    (a) receiving image data representing the medical image (330);
    (b) a trained multi-agent module applying each of a plurality of agents (220a, 220b) to a respective one of a plurality of sub-regions (222a, 222b)of the image data to calculate a plurality of sets of first action values, wherein the function of each agent is approximated by a neural network, wherein an action corresponds to a movement of a sub-region (222a, 222b), each of the sets of first action values (230a, 230b) corresponding to one of the sub-regions (222a, 222b), each of the first action values corresponding to a respective movement of a predetermined set of movements of the sub-region (222a,222b) that the respective agent (220a, 220b) is configured to perform, each agent (220a, 220b) being trained to detect a different landmark type (334a, 334b), wherein an action value (230a, 230b) represents the probability that the respective movement will result in the respective sub-region (222a, 222b) moving closer to the target landmark (334a, 334b);
    the method being **characterized by**:
    (c) applying a trained consultant module neural network (440, 440') to the plurality of sets of first action values (230a, 230b), thereby determining, for each of the plurality of agents (220a, 220b), based on the plurality of sets of first action values (230a, 230b), one or more second action values (564, 674), each of the one or more second action values (564, 674) corresponding to a movement of the predetermined set of movements of the sub-region (222a, 222b) that the agent (230a, 230b) is configured to perform, the trained consultant module neural network (440, 440') having been trained to determine from such sets of first action values (230a, 230b) one or more such second action values (564, 674) for each of the plurality of agents (220a, 220b);
wherein the method comprises, at each of the plurality of agents (230a, 230b):

    (d) receiving the one or more second action values (564, 674) determined for the agent by the trained consultant module neural network (440, 440');
    (e) determining, based on the received one or more second action values (564, 674), and based on the set of first action values calculated by the agent, an action to be performed by the agent;
    (f) performing the determined action thereby to move the sub-region associated with the agent,

wherein the method further comprises:
repeating the steps (b) - (f) iteratively such that the sub-region associated with each agent moves to a landmark until the sub-region is located at the landmark, thereby to detect one or more landmarks (334a, 334b) in the image data.

2. The method according to claim 1, wherein the method is for detecting a plurality of landmarks (334a, 334b) of a medical image (330), each landmark of the plurality of landmarks (334a, 334b) being of a different type; and wherein each agent (220a, 220b) has been trained to move an associated sub-region to a respective different landmark type.

3. The method according to any one of claim 1 to claim 2, wherein the medical image (330) is a 3D medical image (330), and wherein the sub-regions (222a, 222b) of the agents (220a, 220b) correspond to sub-volumes (222a, 222b) of the image data.

4. The method according to any one of claim 1 to claim 3, wherein the medical image (330) is a cardiac ultrasound image, and wherein said landmarks (224a, 334b) are anatomical landmarks of the heart.

**5.** The method according to claim 4, wherein the method comprises, at each agent (220a, 220b), for each movement of the predetermined set of movements that the agent is configured to perform, performing a weighted sum of the second action value associated with the movement and the first action value calculated for the movement; and wherein, for each agent (220a, 220b), determining the action to be performed by the agent comprises determining the movement of the predetermined set of movements that has the largest said weighted sum.

**6.** The method according to any one of claim 1 to claim 5, wherein the trained consultant module neural network (440, 440') comprises fully connected layers (672) trained to transform a combination of the sets of first action values (230a, 230b) obtained for each agent (220a, 220b) into a combination of said second action values (564, 674) for each agent (220a, 220b), wherein the combination of the sets of first action values (230a, 230b) comprises a concatenation of the sets of first action values (230a, 230b), and the combination of the second action values (564, 674) is in the form of a vector whose entries indicate the second action values (564, 674) for each agent (220a, 220b) in a predetermined order.

**7.** The method according to any one of claim 1 to claim 6, wherein the consultant module neural network (440, 440') has been trained using supervised learning.

**8.** The method according to claim 7, wherein input training data for the supervised learning comprises said first action values from each of a plurality of said agents (220a, 220b) of a trained multi-agent module applied to training image data, wherein output training data for the supervised learning comprises said second action values for each agent; and wherein a supervision signal for the supervised learning comprises, for each agent, a ground truth location of a landmark within the training image data that the agent is trained to move an associated sub-region to.

**9.** The method according to any one of claim 1 to claim 8, wherein the trained multi-agent module is a trained multi-agent neural network, and wherein each agent (220a, 220b) calculates for the sub-region (222a, 222b)to which the agent is applied a set of encoded features (226a, 226b) representing the sub-region of the image data; and wherein the trained consultant module neural network (440, 440') determines the one or more second action values (564, 674) for each of the plurality of agents (220a, 220b) based additionally on the sets of encoded features (226a, 226b).

**10.** A computer implemented method for training a consultant module neural network (440a, 440b), the method comprising:

receiving input training data, the input training data comprising a plurality of sets of first action values, wherein an action corresponds to a movement of a sub-region (222a, 222b) in training image data , each of the plurality of sets of first action values having been calculated by a respective one of a plurality of agents (220a, 220b) of a trained multi-agent module applied to a respective one of a plurality of sub-regions of training image data, wherein the function of each agent is approximated by a neural network, each of the sets of first action values corresponding to one of the sub-regions, each of the first action values corresponding to a movement of a predetermined set of movements of the sub-region that the respective agent is configured to perform, wherein an action value (230a, 230b) represents the probability that the respective movement will result in the respective sub-region (222a, 222b) moving closer to a given landmark (334a, 334b), each agent being trained to move an associated sub-region to the given landmark in the training image data;
wherein in the training image data the ground-truth location of the given landmark is labeled;
receiving output training data, the output training data comprising one or more second action values output by the consultant module neural network (440, 440') for each agent, the one or more second action values corresponding to, for each agent, a movement of the predetermined set of movements of the sub-region that the agent is configured to perform, the second action values being determined by the consultant module neural network (440, 440') based on the plurality of sets of first action values;
training the consultant module neural network (440, 440') based on the input training data and based on the output training data, wherein the training is by supervised learning and a supervision signal for the supervised learning comprises an indication of whether or not, for each agent (220a, 220b), the second action values output by the consultant module neural network (440, 440') indicate a movement of the associated sub-region towards a ground truth location of the landmark within the training image data that the agent (220a, 220b) is trained to move the associated sub-region to; and
providing the trained consultant module neural network (440, 440').

**11.** A computer program comprising instructions which, when executed by a computer system (700), cause the computer system (700) to perform the method according to any one of claims 1 to 9, or the method of claim 10.

12. A computer readable storage medium having instructions stored thereon which, when executed by a computer system (700), cause the computer system (700) to perform the method according to any one of claims 1 to 9, or the method of claim 10.

**Patentansprüche**

1. Computer-implementiertes Verfahren zum Erkennen eines oder mehrerer Merkmalspunkte (334a, 334b) eines medizinischen Bildes (330), wobei das Verfahren umfasst:

   (a) Empfangen von Bilddaten, die das medizinische Bild darstellen (330);
   (b) ein trainiertes Mehragentenmodul, das jeden von mehreren Agenten (220a, 220b) auf einen jeweiligen von mehreren Teilbereichen (222a, 222b) der Bilddaten anwendet, um mehrere Sätze von ersten Aktionswerten zu berechnen, wobei die Funktion jedes Agenten durch ein neuronales Netz angenähert wird, wobei eine Aktion einer Bewegung eines Teilbereichs (222a, 222b) entspricht, wobei jeder der Sätze von ersten Aktionswerten (230a, 230b) einem der Teilbereiche (222a, 222b) entspricht, jeder der ersten Aktionswerte einer jeweiligen Bewegung eines vorbestimmten Satzes von Bewegungen des Teilbereichs (222a, 222b) entspricht, die der jeweilige Agent (220a, 220b) ausgelegt ist durchzuführen, wobei jeder Agent (220a, 220b) darauf trainiert ist, einen anderen Merkmalspunkttyp (334a, 334b) zu erkennen, wobei ein Aktionswert (230a, 230b) die Wahrscheinlichkeit darstellt, dass die jeweilige Bewegung dazu führt, dass sich der jeweilige Teilbereich (222a, 222b) näher an den Zielmerkmalspunkt (334a, 334b) bewegt;

   wobei das Verfahren **gekennzeichnet ist durch**:

   (c) Anwenden eines trainierten neuronalen Netzes mit Beratermodul (440, 440') auf die mehreren Sätze von ersten Aktionswerten (230a, 230b), wodurch für jeden der mehreren Agenten (220a, 220b) basierend auf den mehreren Sätzen von ersten Aktionswerten (230a, 230b) ein oder mehrere zweite Aktionswerte (564, 674) bestimmt werden, wobei jeder der ein oder mehreren zweiten Aktionswerte (564, 674) einer Bewegung des vorbestimmten Satzes von Bewegungen des Teilbereichs (222a, 222b) entspricht, die der Agent (230a, 230b) ausgelegt ist durchzuführen, wobei das trainierte neuronale Netz mit Beratermodul (440, 440') darauf trainiert wurde, aus solchen Sätzen von ersten Aktionswerten (230a, 230b) einen oder mehrere solcher zweiten Aktionswerte (564, 674) für jeden der mehreren Agenten (220a, 220b) zu bestimmen;
   wobei das Verfahren an jedem der mehreren Agenten (230a, 230b) umfasst:

   (d) Empfangen der ein oder mehreren zweiten Aktionswerte (564, 674), die **durch** das trainierte neuronale Netz mit Beratermodul (440, 440') für den Agenten bestimmt wurden;
   (e) Bestimmen, basierend auf den empfangenen ein oder mehreren zweiten Aktionswerten (564, 674) und basierend auf dem Satz von ersten Aktionswerten, die **durch** den Agenten berechnet wurden, einer Aktion, die **durch** den Agenten durchgeführt werden soll;
   (f) Durchführen der bestimmten Aktion, um den mit dem Agenten verknüpften Teilbereich zu bewegen,
   wobei das Verfahren ferner umfasst:
   iteratives Wiederholen der Schritte (b) - (f), so dass sich der mit jedem Agenten verknüpfte Teilbereich zu einem Merkmalspunkt bewegt, bis sich der Teilbereich am Merkmalspunkt befindet, um dadurch einen oder mehrere Merkmalspunkte (334a, 334b) in den Bilddaten zu erkennen.

2. Verfahren nach Anspruch **1,** wobei das Verfahren zum Erkennen mehrerer Merkmalspunkte (334a, 334b) eines medizinischen Bildes (330) dient, wobei jeder Merkmalspunkt der mehreren Merkmalspunkte (334a, 334b) von einem anderen Typ ist; und wobei jeder Agent (220a, 220b) darauf trainiert wurde, einen zugehörigen Teilbereich zu einem jeweils anderen Merkmalspunkttyp zu bewegen.

3. Verfahren nach einem von Anspruch 1 bis Anspruch 2, wobei das medizinische Bild (330) ein medizinisches 3D-Bild (330) ist und wobei die Teilbereiche (222a, 222b) der Agenten (220a, 220b) Teilvolumina (222a, 222b) der Bilddaten entsprechen.

4. Verfahren nach einem von Anspruch 1 bis Anspruch 3, wobei das medizinische Bild (330) ein Herzultraschallbild ist und wobei die Merkmalspunkte (224a, 334b) anatomische Merkmalspunkte des Herzens sind.

5. Verfahren nach Anspruch 4, wobei das Verfahren umfasst, bei jedem Agenten (220a, 220b) für jede Bewegung des vorbestimmten Satzes von Bewegungen, die der Agent ausgelegt ist durchzuführen, eine gewichtete Summe des zweiten Aktionswerts, der mit der Bewegung verknüpft ist, und des für die Bewegung berechneten ersten Aktionswerts durchzuführen; und wobei für jeden Agenten (220a, 220b) das Bestimmen der durch den Agenten durchzuführenden Aktion umfasst, die Bewegung des vorbestimmten Satzes von Bewegungen, der die größte gewichtete Summe aufweist, zu bestimmen.

6. Verfahren nach einem von Anspruch 1 bis Anspruch 5, wobei das trainierte neuronale Netz mit Beratermodul (440, 440') vollständig verbundene Schichten (672) umfasst, die darauf trainiert sind, eine Kombination der für jeden Agenten (220a, 220b) erhaltenen Sätze von ersten Aktionswerten (230a, 230b) in eine Kombination der zweiten Aktionswerte (564, 674) für jeden Agenten (220a, 220b) umzuwandeln, wobei die Kombination der Sätze von ersten Aktionswerten (230a, 230b) eine Verkettung der Sätze von ersten Aktionswerten (230a, 230b) umfasst und die Kombination der zweiten Aktionswerte (564, 674) die Form eines Vektors hat, dessen Einträge die zweiten Aktionswerte (564, 674) für jeden Agenten (220a, 220b) in einer vorgegebenen Reihenfolge angeben.

7. Verfahren nach einem von Anspruch 1 bis Anspruch 6, wobei das neuronale Netz mit Beratermodul (440, 440') durch überwachtes Lernen trainiert worden ist.

8. Verfahren nach Anspruch 7, wobei Eingangs-Trainingsdaten für das überwachte Lernen die ersten Aktionswerte von jedem von mehreren Agenten (220a, 220b) eines trainierten Mehragentenmoduls, das auf Trainingsbilddaten angewendet wird, umfassen, wobei Ausgangs-Trainingsdaten für das überwachte Lernen die zweiten Aktionswerte für jeden Agenten umfassen; und wobei ein Überwachungssignal für das überwachte Lernen für jeden Agenten eine Grundwahrheitsposition eines Merkmalspunkts innerhalb der Trainingsbilddaten umfasst, an den der Agent trainiert ist, einen zugehörigen Teilbereich zu bewegen.

9. Verfahren nach einem von Anspruch 1 bis Anspruch 8, wobei das trainierte Mehragentenmodul ein trainiertes neuronales Mehragentennetz ist und wobei jeder Agent (220a, 220b) für den Teilbereich (222a, 222b), auf den der Agent angewendet wird, einen Satz von codierten Merkmalen (226a, 226b) berechnet, die den Teilbereich der Bilddaten repräsentieren; und wobei das trainierte neuronale Netz mit Beratermodul (440, 440') die ein oder mehreren zweiten Aktionswerte (564, 674) für jeden der mehreren Agenten (220a, 220b) zusätzlich basierend auf den Sätzen von codierten Merkmalen (226a, 226b) bestimmt.

10. Computer-implementiertes Verfahren zum Trainieren eines neuronalen Netzes mit Beratermodul (440a, 440b), wobei das Verfahren umfasst:

Empfangen von Eingangs-Trainingsdaten, wobei die Eingangs-Trainingsdaten mehrere Sätze von ersten Aktionswerten umfassen, wobei eine Aktion einer Bewegung eines Teilbereichs (222a, 222b) in Trainingsbilddaten entspricht, wobei jeder der mehreren Sätze von ersten Aktionswerten durch einen jeweiligen von mehreren Agenten (220a, 220b) eines trainierten Mehragentenmoduls, das auf einen jeweiligen von mehreren Teilbereichen von Trainingsbilddaten angewendet wird, berechnet wurde, wobei die Funktion jedes Agenten durch ein neuronales Netz angenähert wird, wobei jeder der Sätze von ersten Aktionswerten einem der Teilbereiche entspricht, wobei jeder der ersten Aktionswerte einer Bewegung eines vorbestimmten Satzes von Bewegungen des Teilbereichs entspricht, die der jeweilige Agent ausgelegt ist durchzuführen, wobei ein Aktionswert (230a, 230b) die Wahrscheinlichkeit darstellt, dass die jeweilige Bewegung dazu führt, dass sich der jeweilige Teilbereich (222a, 222b) näher zu einem gegebenen Merkmalspunkt (334a, 334b) bewegt, wobei jeder Agent darauf trainiert ist, einen zugehörigen Teilbereich zu dem gegebenen Merkmalspunkt in den Trainingsbilddaten zu bewegen;
wobei in den Trainingsbilddaten die Grundwahrheitsposition des gegebenen Merkmalspunkts markiert ist;
Empfangen von Ausgangs-Trainingsdaten, wobei die Ausgangs-Trainingsdaten einen oder mehrere zweite Aktionswerte umfassen, die durch das neuronale Netz mit Beratermodul (440, 440') für jeden Agenten ausgegeben werden, wobei die ein oder mehreren zweiten Aktionswerte für jeden Agenten einer Bewegung des vorbestimmten Satzes von Bewegungen des Teilbereichs entsprechen, die der Agent ausgelegt ist durchzuführen, wobei die zweiten Aktionswerte durch das neuronale Netz mit Beratermodul (440, 440') basierend auf den mehreren Sätzen von ersten Aktionswerten bestimmt werden;
Trainieren des neuronalen Netzes mit Beratermodul (440, 440') basierend auf den Eingangs-Trainingsdaten und basierend auf den Ausgangs-Trainingsdaten, wobei das Training durch überwachtes Lernen erfolgt und ein Überwachungssignal für das überwachte Lernen eine Anzeige umfasst, ob für jeden Agenten (220a, 220b) die zweiten Aktionswerte, die durch das neuronale Netz mit Beratermodul (440, 440') ausgegeben werden, eine Bewegung des zugehörigen Teilbereichs in Richtung einer Grundwahrheitsposition des Merkmalspunkts innerhalb der Trainingsbilddaten, an den der Agent (220a, 220b) trainiert ist, den zugehörigen Teilbereich zu bewegen, anzeigen oder nicht; und Bereitstellen des trainierten neuronalen Netzes mit Beratermodul (440, 440').

11. Computerprogramm, das Anweisungen umfasst, die bei Ausführung durch ein Computersystem (700) das Computersystem (700) veranlassen, das Verfahren nach einem der Ansprüche 1 bis 9 oder das Verfahren nach Anspruch 10 durchzuführen.

12. Computerlesbares Speichermedium, auf dem Anweisungen gespeichert sind, die bei Ausführung durch ein Computersystem (700) das Computersystem (700) veranlassen, das Verfahren nach einem der Ansprüche 1 bis 9 oder das Verfahren nach Anspruch 10 durchzuführen.

## Revendications

1. Un procédé mis en œuvre par ordinateur de détection d'un ou de plusieurs repères (334a, 334b) d'une image (330) médicale, le procédé comprenant :

   (a) recevoir une donnée d'image représentant l'image (330) médicale ;
   (b) un module entraîné à plusieurs agents appliquant chacun d'une pluralité d'agents (220a, 220b) à l'une respectivement de la pluralité de sous-régions (222a, 222b) de la donnée d'image pour calculer une pluralité d'ensembles de premières valeurs d'action, dans lequel la fonction de chaque agent est obtenue en approximation par un réseau neuronal, dans lequel une action correspond à un mouvement d'une sous-région (222a, 222b), chacun des ensembles de premières valeurs (230a, 230b) d'action correspondant à l'une des sous-régions (222a, 222b), chacune des premières valeurs d'action correspondant à un mouvement respectif d'un ensemble déterminé à l'avance de mouvements de la sous-région (222a, 222b) que l'agent (220a, 220b) respectif est configuré pour effectuer, chaque agent (220a, 220b) étant entraîné pour détecter un type (334a, 334b) différent de repère,

   dans lequel une valeur (230a, 230b) d'action représente la probabilité que le mouvement respectif se traduira par le fait que la sous-région (222a, 222b) se rapproche du repère (334a, 334b) cible ;

   le procédé étant **caractérisé par** :
   (c) appliquer un réseau (440, 440') neuronal entraîné de module consultant à la pluralité d'ensembles des premières valeurs (230a, 230b) d'action, en déterminant ainsi, pour chacun de la pluralité d'agents (220a, 220b), sur la base de la pluralité d'ensembles des premières valeurs (230a, 230b) d'action, une ou plusieurs deuxièmes valeurs (564, 674) d'action, chacune de la une ou des plusieurs deuxièmes valeurs (564, 674) d'action correspondant à un mouvement de l'ensemble déterminé à l'avance de mouvements de la sous-région (222a, 222b) que l'agent (230a, 230b) est configuré pour effectuer, le réseau (440, 440') neuronal entraîné de module consultant ayant été entraîné pour déterminer, à partir de tels ensembles de premières valeurs (230a, 230b) d'action, une ou plusieurs telles deuxièmes valeurs (564, 674) d'action pour chacun de la pluralité d'agents (220a, 220b) ;

   dans lequel le procédé comprend, à chacun de la pluralité d'agents (230a, 230b) :

   (d) recevoir la une ou les plusieurs deuxièmes valeurs (564, 674) d'action déterminées pour l'agent par le réseau (440, 440') neuronal entraîné de module consultant ;
   (e) déterminer, sur la base de la une ou des plusieurs deuxièmes valeurs (564, 674) d'action reçues, et sur la base de l'ensemble des premières valeurs d'action calculé par l'agent, une action à effectuer par l'agent ;
   (f) effectuer l'action déterminée ainsi pour faire se déplacer la sous-région associée à l'agent,

   dans lequel le procédé comprend en outre :
   répéter les stades (b) - (f) itérativement de manière à ce que la sous-région associée à chaque agent se déplace vers un repère jusqu'à ce que la sous-région soit sur le repère, en détectant ainsi un ou plusieurs repères (334a, 334b) dans la donnée d'image.

2. Le procédé suivant la revendication 1, dans lequel le procédé est destiné à détecter une pluralité de repères (334a, 334b) d'une image (330) médicale, chaque repère de la pluralité de repères (334a, 334b) étant d'un type différent ; et dans lequel chaque agent (220a, 220b) a été entraîné pour déplacer une sous-région associée vers un type de repère respectif différent.

3. Le procédé suivant l'une quelconque de la revendication 1 ou de la revendication 2, dans lequel l'image (330) médicale est une image (330) médicale en 3D, et dans lequel les sous-régions (222a, 222b) des agents (220a, 220b) correspondent à des sous-volumes (222a, 222b) de la donnée d'image.

4. Le procédé suivant l'une quelconque des revendications 1 à revendication 3, dans lequel l'image (330) médicale est une image cardiaque par ultrasons, et dans lequel lesdits repères (224a, 334b) sont des repères anatomiques du cœur.

5. Le procédé suivant la revendication 4, dans lequel le procédé comprend, à chaque agent (220a, 220b), pour chaque mouvement de l'ensemble déterminé à l'avance de mouvements que l'agent est configuré pour effectuer, effectuer une somme pondérée de la deuxième valeur associée au mouvement et de la première valeur d'action calculée pour le mouvement ; et dans lequel, pour chaque agent (220a, 220b), déterminer l'action à effectuer par l'agent comprend déterminer le mouvement de l'ensemble déterminé à l'avance de mouvements, qui a ladite somme pondérée la plus grande.

6. Le procédé suivant l'une des revendications 1 à revendication 5, dans lequel le réseau (440, 440') neuronal entraîné de module consultant comprend des couches (672) connectées complètement, entraînées pour transformer une combinaison des ensembles de premières valeurs (230a, 230b) d'action obtenus pour chaque agent (220a, 220b) en une combinaison desdites deuxièmes valeurs (564, 674) d'action pour chaque agent (220a, 220b), dans lequel la combinaison des ensembles de premières valeurs (230a, 230b) d'action comprend une concaténation des ensembles de premières valeurs (230a, 230b) d'action, et la combinaison des deuxièmes valeurs (564, 674) d'action est sous la forme d'un vecteur, dont les entrées indiquent les deuxièmes valeurs (564, 674) d'action pour chaque agent (220a, 220b) dans un ordre déterminé à l'avance.

7. Le procédé suivant l'une quelconque des revendications 1 à revendication 6, dans lequel le réseau (440, 440') neuronal de module consultant a été entraîné en utilisant un apprentissage supervisé.

8. Le procédé suivant la revendication 7, dans lequel une donnée d'entrée d'entraînement pour l'apprentissage supervisé comprend lesdites premières valeurs d'action de chacun d'une pluralité desdits agents (220a, 220b) d'un module entraîné à plusieurs agents appliqué pour entraîner des données d'image, dans lequel une donnée de sortie d'entraînement pour l'apprentissage supervisé comprend lesdites deuxièmes valeurs d'action pour chaque agent ; et dans lequel un signal de supervision pour l'apprentissage supervisé comprend, pour chaque agent, un emplacement de vérité de terrain d'un repère dans la donnée d'image d'entraînement, vers lequel l'agent est entraîné pour déplacer une sous-région associée.

9. Le procédé suivant l'une quelconque des revendications 1 à revendication 8, dans lequel le module entraîné à plusieurs agents est un réseau neuronal entraîné à plusieurs agents, et dans lequel chaque agent (220a, 220b) calcule, pour la sous-région (222a, 222b) à laquelle l'agent est appliqué, un ensemble de caractéristiques (226a, 226b) codées représentant la sous-région de la donnée d'image ; et dans lequel le réseau (440, 440') neuronal entraîné de module consultant détermine les une ou plusieurs deuxièmes valeurs (564, 674) d'action pour chacun de la pluralité d'agents (220a, 220b) sur la base supplémentairement des ensembles de caractéristiques (226a, 226b) codés.

10. Un procédé mis en œuvre par ordinateur d'entraînement d'un réseau (440a, 440b) neuronal de module consultant, le procédé comprenant :

recevoir une donnée d'entrée d'entraînement, la donnée d'entrée d'entraînement comprenant une pluralité d'ensembles de premières valeurs d'action, dans lequel une action correspond à un mouvement d'une sous-région (222a, 222b) dans une donnée d'image d'entraînement, chacun de la pluralité d'ensembles de premières valeurs d'action ayant été calculé par l'un respectif d'une pluralité d'agents (220a, 220b) d'un module entraîné à plusieurs agents appliqué à l'une respective d'une pluralité de sous-régions de donnée d'image d'entraînement, dans lequel la fonction de chaque agent est obtenue avec approximation par un réseau neuronal, chacun des ensembles de premières valeurs d'action correspondant à l'une des sous-régions, chacune des premières valeurs d'action correspondant à un mouvement d'un ensemble déterminé à l'avance de mouvements de la sous-région que l'agent respectif est configuré pour effectuer, dans lequel une valeur (230a, 230b) d'action représente la probabilité que le mouvement respectif se traduira par le fait que la sous-région (222a, 222b) respective se rapproche d'un repère (334a, 334b) donné, chaque agent étant entraîné pour déplacer une sous-région associée au repère donné dans la donnée d'image d'entraînement ;
dans lequel, dans la donnée d'image d'entraînement, l'emplacement de vérité de terrain du repère donné est étiqueté ;
recevoir une donnée de sortie d'entraînement, la donnée de sortie d'entraînement comprenant une ou plusieurs deuxièmes valeurs d'action sorties par le réseau (440, 440') neuronal de module consultant pour chaque agent, la une ou les plusieurs deuxièmes valeurs d'action correspond à, pour chaque agent, un mouvement de l'ensemble déterminé à l'avance de mouvements de la sous-région que l'agent est configuré pour effectuer, les deuxièmes valeurs d'action étant déterminées par le réseau (440, 440') neuronal de module consultant sur la base de la pluralité d'ensembles de premières valeurs d'action ;

entraîner le réseau (440, 440') neuronal de module consultant sur la base de la donnée d'entrée d'entraînement et sur la base de la donnée de sortie d'entraînement, dans lequel l'entraînement est effectué par un apprentissage supervisé et un signal de supervision pour l'apprentissage supervisé comprend une indication si ou non, pour chaque agent (220a, 220b), les deuxièmes valeurs d'action, sorties par le réseau (440, 440') neuronal de module consultant, indiquent un mouvement de la sous-région associée vers un emplacement de vérité de terrain du repère dans la donnée d'image d'entraînement vers lequel l'agent (220a, 220b) est entraîné pour déplacer la sous-région associée ; et

donner le réseau (440, 440') neuronal entraîné de module consultant.

11. Un programme d'ordinateur comprenant des instructions qui, lorsqu'elles sont exécutées par un système (700) informatique, font que le système (700) informatique effectue le procédé suivant l'une quelconque des revendications 1 à **9,** ou le procédé suivant la revendication 10.

12. Un support de mémoire, déchiffrable par ordinateur, ayant des instructions qui y sont mises en mémoire et qui, lorsqu'elles sont exécutées par un système (700) informatique font que le système (700) informatique effectue le procédé suivant l'une quelconque des revendications 1 à 9, ou le procédé de la revendication 10.

**FIG 1**

```
┌──────────────────────────────────────┐
│                                      │
│          receiving image data        │────102
│                                      │
└──────────────────────────────────────┘
                   │
                   ▼
┌──────────────────────────────────────┐
│      applying agents to the image data │
│      to calculate sets of first action values │────104
│                                      │
└──────────────────────────────────────┘
                   │
                   ▼
┌──────────────────────────────────────┐
│    applying a trained consultant module neural │
│    network to the sets of first action values │────106
│                                      │
└──────────────────────────────────────┘
                   │
                   ▼
┌──────────────────────────────────────┐
│      at each agent, receiving second action │
│      values determined by the consultant │────108
│          module for the agent        │
└──────────────────────────────────────┘
                   │
                   ▼
┌──────────────────────────────────────┐
│      at each agent, determining an action │
│    based on the first and second action values │────110
│                                      │
└──────────────────────────────────────┘
                   │
                   ▼
┌──────────────────────────────────────┐
│  at each agent, performing the determined action │────112
└──────────────────────────────────────┘
```

# FIG 2

Agent 220a

# FIG 3

FIG 4

Consultant
440

444a      446a
            446b

      444b

Agent
220a

Agent
220b

FIG 5

222a      220a

Agent

230a

222b      220b

Agent

230b

Consultant 440      564

564

558

562

## FIG 6

## FIG 7

**EP 3 885 990 B1**

## REFERENCES CITED IN THE DESCRIPTION

**Patent documents cited in the description**

- EP 3246875 A2

- EP 3370206 A1

**Non-patent literature cited in the description**

- Multiple Landmark Detection using Multi-Agent Reinforcement Learning. **ATHANASIOS VLONTZOS et al.** ARXIV.ORG. CORNELL UNIVERSITY LIBRARY, 30 June 2019